**Europäisches Patentamt**

**European Patent Office**

**Office européen des brevets**

(19)

(11) Veröffentlichungsnummer: **0 061 152 B1**

(12) **EUROPÄISCHE PATENTSCHRIFT**

(45) Veröffentlichungstag der Patentschrift:
23.04.86

(51) Int. Cl.⁴: **B 61 D 27/00**, G 05 D 23/19, B 60 H 1/22

(21) Anmeldenummer: **82102207.6**

(22) Anmeldetag: **18.03.82**

(54) Verfahren zum Betrieb einer Einkanal-Klimaanlage für Reisezugwagen.

(30) Priorität: **23.03.81 DE 3111281**

(43) Veröffentlichungstag der Anmeldung:
**29.09.82 Patentblatt 82/39**

(45) Bekanntmachung des Hinweises auf die Patenterteilung:
**23.04.86 Patentblatt 86/17**

(84) Benannte Vertragsstaaten:
**AT BE CH DE LI NL**

(56) Entgegenhaltungen:
**DE - A - 2 121 936**
**DE - A - 2 633 243**

**ELEKTRISCHE BAHNEN, Band 78, Nr. 8, August 1980, Seiten 214-221, Munchen, DE., J. BRENNEISEN: "Klimaanlagen in Reisezugwagen"**
**BBC-NACHRICHTEN, Band 63, Nr. 4, 1981, Seiten 141-148, Mannheim, DE., R. KEMPF et al.: "Die Klimaanlagen der neuen Komfortwagen der Ägyptischen Eisenbahnen"**
**BBC, Druckschrift, UK 50913D, S. 4-6**
**Druckschrift ETR (29) 12-1980, S. 845-846**

(73) Patentinhaber: **BROWN, BOVERI & CIE Aktiengesellschaft, Kallstadter Strasse 1, D-6800 Mannheim 31 (DE)**

(72) Erfinder: **Remenyi, Karl, Dipl.-Ing., Plattstrasse 10, D-6800 Mannheim 24 (DE)**
Erfinder: **Hayer, Friedrich, Ing., Goethestrasse 24, D-6804 Ilvesheim (DE)**

(74) Vertreter: **Kempe, Wolfgang, Dr. et al, c/o BROWN, BOVERI & CIE AG Kallstadter Strasse 1, D-6800 Mannheim-Käfertal (DE)**

## Beschreibung

Die Erfindung bezieht sich auf eine Einkanal-Klimaanlage für Reisezug-Abteilwagen mit mindestens einem den Wärmegrundbedarf deckenden zentralen Luftbehandlungsgerät mit mindestens zwei Heizregistern für die Vorlauftemperatur des Heizmediums und einem zentralen Steuergerät, in dem eine Führungsgrösse für die Vorlauftemperatur gebildet wird und Schaltmittel in Abhängigkeit von der Führungsgrösse für die Vorlauftemperatur das zentrale Luftbehandlungsgerät schalten sowie Nachheizkörper für die individuelle Einstellung der Abteiltemperatur in jedem Abteil, welche jeweils in Abhängigkeit von einem Sollwertgeber in einem Abteil gesteuert werden.

Einkanal-Klimaanlagen sind z.B. in der Druckschrift Brown, Boveri & Cie, AG VK50913D, Seiten 4 bis 6 beschrieben.

Bei solchen Einkanal-Klimaanlagen für Reisezugwagen mit Abteilen wird in einfacher Form der Energiebedarf durch das Produkt aus Luftmenge und Temperatur gedeckt, der mittels des Wärmeträgers Luft in die einzelnen Abteile befördert wird. Zur Erfüllung des Wunsches einer individuell einstellbaren Temperatur ist in den Abteilen jeweils ein Nachheizkörper vorgesehen. Durch den erwähnten Wärmeträger (Vorlauf) wird nur der Energiegrundbedarf z.B. für das Abteil mit der niedrigsten Temperatur gedeckt. Durch Nachheizen mit den erwähnten Nachheizkörpern wird auf den Energiegrundbedarf aufgebaut und auch die Störeinflüsse ausgeregelt.

Die beiden Systeme «Vorlauftemperatur» und «Abteilregelung» müssen dabei in sinnvoller Weise zusammenspielen, d.h. die Vorlauftemperatur wird von der gewünschten Abteiltemperatur bestimmt. Zur Erwärmung des Wärmeträgers ist ein Luftbehandlungsgerät mit einem elektrischen Heizregister eingebaut, welches aus der Zugsammelschiene gespeist wird (in Europa 1000V ∼ 16 ⅔Hz oder 1500V ∼ 50Hz, 1500V = oder 3000V =). In den Abteilen sind jeweils Zusatzheizkörper von etwa 5 bis 10% der Leistung des zentralen Heizregisters installiert, die z.B. aus einer Umformeinrichtung mit 220V Wechselstrom gespeist sind.

Die Heizregister des zentralen Luftbehandlungsgerätes werden mittels Hochspannungsschützen ein- und ausgeschaltet. Bei diesem System ist nur eine Zweipunktregelung möglich. Dabei ist die Schalthäufigkeit durch die mechanische Lebensdauer der Heizschützen begrenzt.

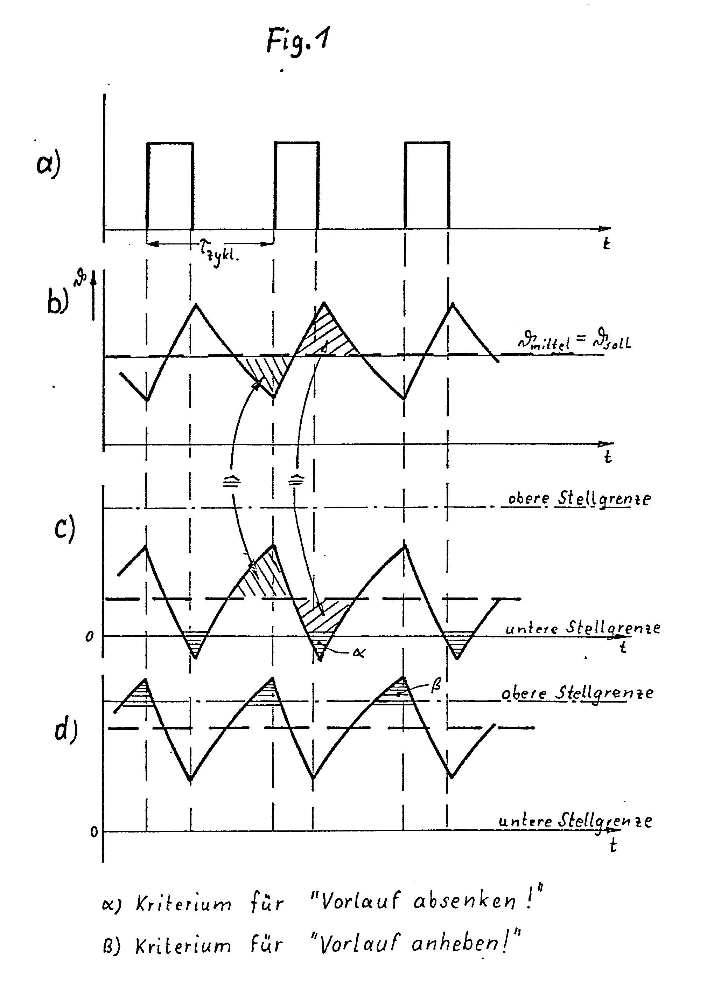

Eine solche Art der Vorlauftemperatur ergibt zwangsläufig einen Temperaturverlauf mit erheblichen Schwankungen (wie in Fig. 1 dargestellt ist). In Fig. 1a ist über der Zeit die dem Luftbehandlungsgerät zugeführte elektrische Arbeit bei Heizbetrieb einer bekannten Einkanal-Klimaanlage und in Fig. 1b die Temperatur $\vartheta$ L im Luftkanal einer Klimaanlage dargestellt. Die Amplituden der Temperatur im Luftkanal entsprechend Fig. 1b können dabei bis 20°K betragen. Diese Schwankungen müssen zusätzlich zur individuellen Temperatursteuerung von den Abteilnachheizkörpern ausgeregelt werden. Das Ausregeln erfolgt dabei so, dass die dem Abteil über den Nachheizkörper zugeführte Energie entsprechend Fig. 1c oder 1d im Gegentakt zur zeitlichen Schwankung der durch den Vorlauf zugeführten Energie entsprechend Fig. 1b gesteuert wird. Bei der relativ kleinen verfügbaren Leistung der Nachheizkörper stösst die Nachheizung sehr bald an Grenzen, d.h. die Vorlauftemperatur schlägt bis zur Abteiltemperatur durch und wirkt sich ausserdem ungünstig aus, da jeweils die Kriterien für das Anheben entsprechend Fig. 1d oder das Absenken entsprechend Fig. 1c der Vorlauftemperatur berührt werden. In Fig. 1c unterschreitet die Sollkurve für den gegenläufigen Temperaturausgleich des Nachheizkörpers die Null-Linie der Heizleistung der Nachheizkörper. Dieser Bereich ist mit $\alpha$ bezeichnet. Da der Nachheizkörper keine Kälte erzeugen kann, die zum Ausgleich erforderlich wäre, können die Temperaturspitzen des Temperaturverlaufs im Vorlaufkanal nicht ausgeregelt werden. Die Vorlauftemperatur muss daher so ausgeregelt werden, dass die Minimalwerte der Sollkurve für den Temperaturverlauf der Nachheizkörper immer positiv sind; d.h. die Flächen $\alpha$ unterhalb der Null-Linie müssen verschwinden. Ihr Vorhandensein kann daher als Indiz für die Regelung «Vorlauftemperatur absenken» verwendet werden. Umgekehrt liegen die Verhältnisse bei der Kurve nach Fig. 1d. Hier übersteigt die Sollkurve für den Temperaturverlauf des Nachheizkörpers mit der Fläche $\beta$ die maximale Leistung des Nachheizkörpers, so dass die erforderliche Wärme zum Ausgleich der Schwankungen der Vorlauftemperatur und zwar der Minimalwerte nicht vorhanden ist und die auftretenden Minimalwerte nicht voll ausgeregelt werden können. Es ist erforderlich, die Vorlauftemperatur so anzuheben, bis die Fläche $\beta$, die über die maximale Leistung des Nachheizkörpers hinausreicht, verschwindet. Das Vorhandensein der Fläche kann daher als Indiz für den Regelvorgang: «Vorlauftemperatur anheben» verwendet werden. Durch dieses dauernde Nachregeln von systembedingten Störgrössen wird ein grosser Teil des Spielraumes für das Nachheizen und für ein individuelles Nachregeln ausgeschöpft. Wünschenswert wäre also eine konstant verlaufende Vorlauftemperatur, was aber praktisch nicht realisierbar ist, da sich dann eine zu grosse Schalthäufigkeit der Heizschütze ergibt.

Es ist Aufgabe der Erfindung bei einer Einkanal-Klimaanlage für Reisezugwagen mit einem den Wärmegrundbedarf deckenden zentralen Luftbehandlungsgerät mit mindestens zwei Heizregistern die Welligkeit der Vorlauftemperaturkurve derart herabzusetzen, dass über die Nachheizkörper die verbleibende Welligkeit mit Sicherheit ausgeregelt werden kann, wobei weder die Schalthäufigkeit der Heizschütze der Heizregister noch der Anschlusswert der Heizung am Bordnetz erhöht werden dürfen.

Als Lösung dieser Aufgabe wird bei der eingangs erwähnten Einkanal-Klimaanlage erfindungsgemäss vorgeschlagen, dass die zwei Heizregister des zentralen Luftbehandlungsgerätes durch Schaltmittel in Abhängigkeit von der Führungsgrösse für die Vorlauftemperatur so zeitlich versetzt gegeneinander zu- bzw. abgeschaltet werden, dass die Einschaltung des zweiten Heizregisters etwa in der Mitte der Zeitdauer des Schaltspieles erfolgt und die Führungsgrösse für die Vorlauftemperatur im zentralen Steuergerät aus der jeweiligen Einschaltdauer der Nachheizkörper der Abteile gebildet wird. Durch die vorgeschlagenen Massnahmen lässt sich die Welligkeit der Temperaturkurve in dem Luftkanal merklich verringern. Ausserdem wird der Maximalwert der benötigten Leistung für die Zusatzheizung herabgesetzt und der Bereich für die Ausregelung durch die Nachheizung wird deutlich vergrössert.

In zweckmässiger Weise wird erfindungsgemäss die Führungsgrösse ($\vartheta_F$) für die Vorlauftemperatur so lange verändert, bis sich für einen der Nachheizkörper der Abteile eine bestimmte minimale bzw. maximale Einschaltdauer ergibt. Auf diese Weise werden die beiden Systeme «Vorlaufregelung» und «Abteilregelung» in sinnvoller Weise verknüpft. Als Kriterium für das Mass in dem im Luftbehandlungsgerät geheizt werden muss, wird die Einschaltdauer der Zusatzheizkörper herangezogen.

Hierzu wird erfindungsgemäss von den Stellgliedern der Nachheizgeräte laufend die Einschaltdauer der Nachheizgeräte an das Steuergerät für die Heizregister des Luftbehandlungsgerätes übertragen und gespeichert und aus den gespeicherten Werten der Wert der geringsten Einschaltdauer ausgewählt und überwacht und das Stellglied für die Heizregister des Luftbehandlungsgerätes erhält so lange ein Ein- bzw. Ausschaltsignal bis der Wert der Einschaltdauer einen bestimmten Betrag erreicht.

Die minimale Einschaltdauer eines Nachheizkörpers eines Abteils kann z.B. etwa 10% betragen. Eines der Abteile ist z.B. voll besetzt und hat damit den geringsten Leistungsbedarf von den vorhandenen Abteilen. In den übrigen Abteilen die z.B. weniger stark besetzt sind, ergibt sich dann aufgrund des jeweils vorgegebenen Sollwertes für die Abteiltemperatur eine höhere Einschaltdauer als für das erst erwähnte Abteil.

Bei einer weiteren Ausführungsform der Erfindung ist vorgesehen, dass von den Stellgliedern für die Nachheizgeräte laufend die Einschaltdauer der Nachheizgeräte an das Steuergerät für die Heizregister des Luftbehandlungsgerätes übertragen und gespeichert wird, dass aus den gespeicherten Werten der Wert der höchsten Einschaltdauer ausgewählt und überwacht wird, und dass das Stellglied für die Heizregister des Luftbehandlungsgerätes so lange ein Ein- bzw. Ausschaltsignal erhält, bis der Wert der Einschaltdauer einen bestimmten Betrag erreicht.

Hierbei kann die maximale Einschaltdauer eines Abteiles etwa 90% betragen. In diesem Falle handelt es sich um ein Abteil welches unbesetzt ist, bei welchem der Sollwert für die Abteiltemperatur auf dem höchsten Wert steht und bei dem ggf. die Abteiltür geöffnet ist.

Für den Fall, dass ein solcher Wert auftreten sollte, ist nach einem weiteren Merkmal der Erfindung vorgesehen, dass die Regelung auf den hohen Einschaltdauerwert Vorrang vor der Regelung auf den kleinen ED-Wert hat, d.h. so lange dieser hohe ED-Wert durch die Führungsgrösse vorgegeben wird, wird die Führungsgrösse für den niedrigen ED-Wert unwirksam, womit sich in dem zugehörigen Abteil eine zu geringe Einschaltdauer für das Nachheizgerät einstellt. In diesem Falle kann sich eine geringfügig zu hohe Temperatur ergeben.

Auf diese Weise wird jedoch erreicht, dass in keinem der anderen Abteile eine zu niedrige Temperatur, die zur Verschlechterung des Befindens der Fahrgäste führen könnte, eintreten kann.

Weitere Einzelheiten und vorteilhafte Weiterbildungen der Erfindung ergeben sich aus dem im folgenden beschriebenen und in der Zeichnung dargestellten Ausführungsbeispiel.

Es zeigen:

Fig. 1a ein Diagramm, in welchem die dem Luftbehandlungsgerät zugeführte elektrische Arbeit über der Zeit aufgetragen ist,

Fig. 1b ein Diagramm, in welchem die Temperatur ($\vartheta_l$) im Luftkanal über der Zeit aufgetragen ist,

Fig. 1c ein Diagramm, in welchem die einem Abteil über den eingeschalteten Heizkörper zuzuführende Soll-Energie im Gegentakt zur zeitlichen Schwankung der durch den Vorlauf zugeführten Energiemenge dargestellt ist,

Fig. 1d ein Diagramm, in welchem die einem Abteil über den eingeschalteten Nachheizkörper zuzuführende Soll-Energie im Gegentakt zur zeitlichen Schwankung der durch den Vorlauf zugeführten Energiemenge dargestellt ist,

Fig. 2 eine schematische Darstellung einer Vorrichtung zur Durchführung des Verfahrens nach der Erfindung,

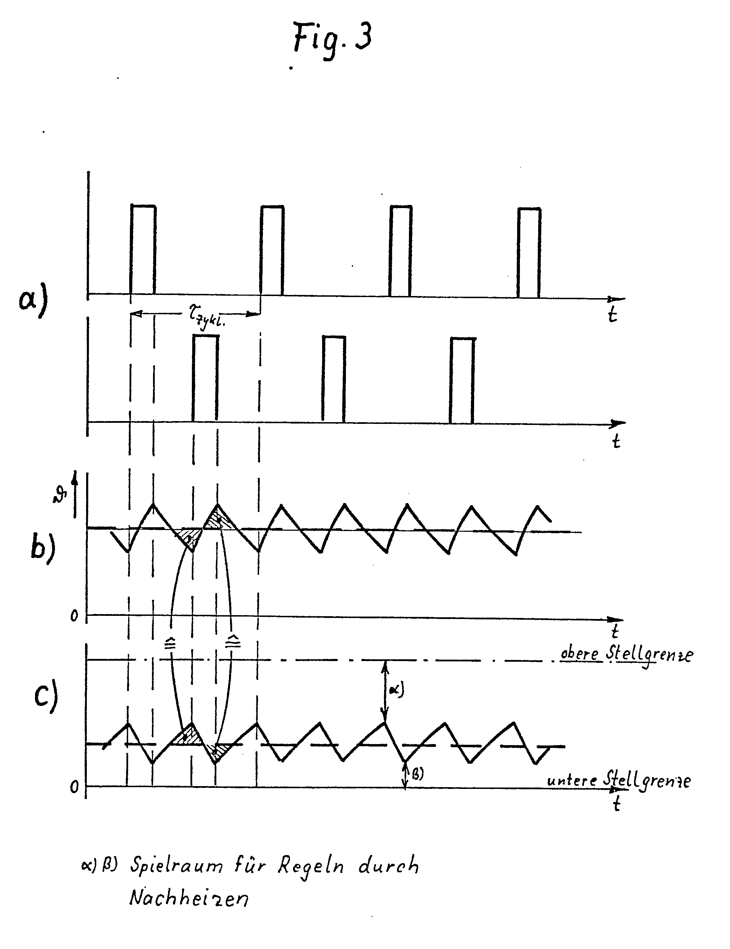

Fig. 3a ein Diagramm, in welchem über der Zeit die den beiden Heizregistern des Luftbehandlungsgerätes zugeführte elektrische Arbeit dargestellt ist,

Fig. 3b zeigt die Temperatur in einem Luftkanal über der Zeit und in

Fig. 3c ist der Verlauf der einem Abteil über den eingeschalteten Nachheizkörper zuzuführende Soll-Energie im Gegentakt zur zeitlichen Schwankung der durch den Vorlauf zugeführten Energiemenge aufgetragen über der Zeit,

Fig. 4 ein Diagramm mit der für jedes Abteil erforderlichen Einschaltdauer des Nachheizkörpers zur Erreichung der jeweils eingestellten Temperatur.

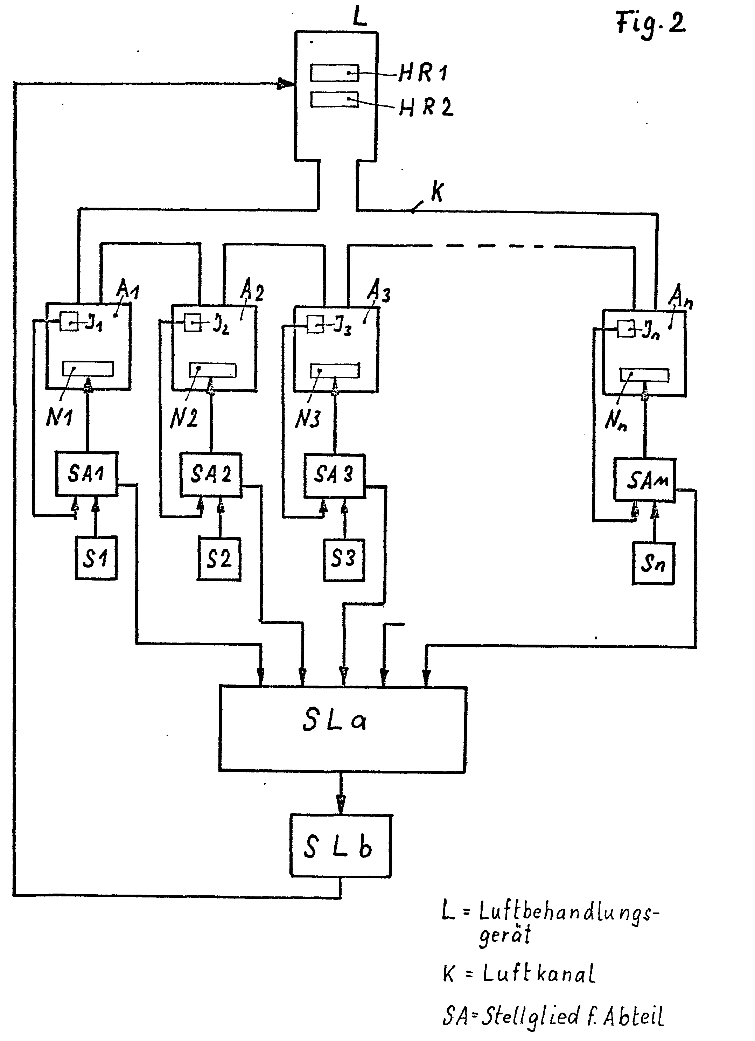

In der schematischen Darstellung entsprechend Fig. 2, in welcher eine Vorrichtung zur Durchführung des Verfahrens dargestellt ist, ist mit L das Luftbehandlungsgerät, mit HR 1, das erste und mit HR 2 das zweite Heizregister des Luftbehandlungsgerätes bezeichnet, während der für die Verbindung des Luftheizgerätes mit den Abteilen $A_1$, $A_2$ ... $A_n$ dienende Luftkanal mit K bezeichnet ist. In den Abteilen sind Nachheizkörper $N_1$, $N_2$ ... $N_n$ sowie Messfühler $I_1$, $I_2$ ... $I_n$ für die Ermittlung des Isttemperaturwertes angeordnet. Die Temperatur-

fühler $I_1$, $I_2$ ... $I_n$ sind mit einem Steuergerät und Stellglied für den Nachheizkörper mit der Bezeichnung $SA_1$, $SA_2$ ... $SA_n$ verbunden. An diese kombinierten Steuergeräte und Stellgliedanordnung ist auch in jedem Abteil ein Sollwertgeber für die Abteiltemperatur $\vartheta S_1$, $\vartheta S_2$ ... $\vartheta S_n$ angeschlossen. Das kombinierte Steuer- und Stellglied $SA_1$ ... $SA_n$ weist weiterhin eine Verbindung mit dem Steuergerät SLa für das Luftbehandlungsgerät auf. Durch diese Verbindung wird die jeweilige Einschaltdauer der einzelnen Steuergeräte $SA_1$ ... $SA_n$ zu dem Steuergerät SLa übertragen. Dem Steuergerät $SL_a$ ist weiterhin ein Stellglied SLb für das Heizregister HR 1 bzw. HR 2 der Luftbehandlungsanlage nachgeschaltet.

Bei einer solchen Klimaanlage ergibt sich, wie schon erwähnt, je nach Einstellung des Sollwertgebers im Abteil und Besetzung der einzelnen Abteile und anderer Randbedingungen (z.B. Sonneneinstrahlung), die für einen längeren Aufenthalt in einem Bahnhof durchaus verschieden in den einzelnen Abteilen sein kann, ein unterschiedlicher Energiebedarf pro Abteil, der durch die Nachheizkörper ausgeregelt werden muss, während ein bestimmter Grundenergiebedarf von dem zentralen Luftbehandlungsgerät gedeckt wird.

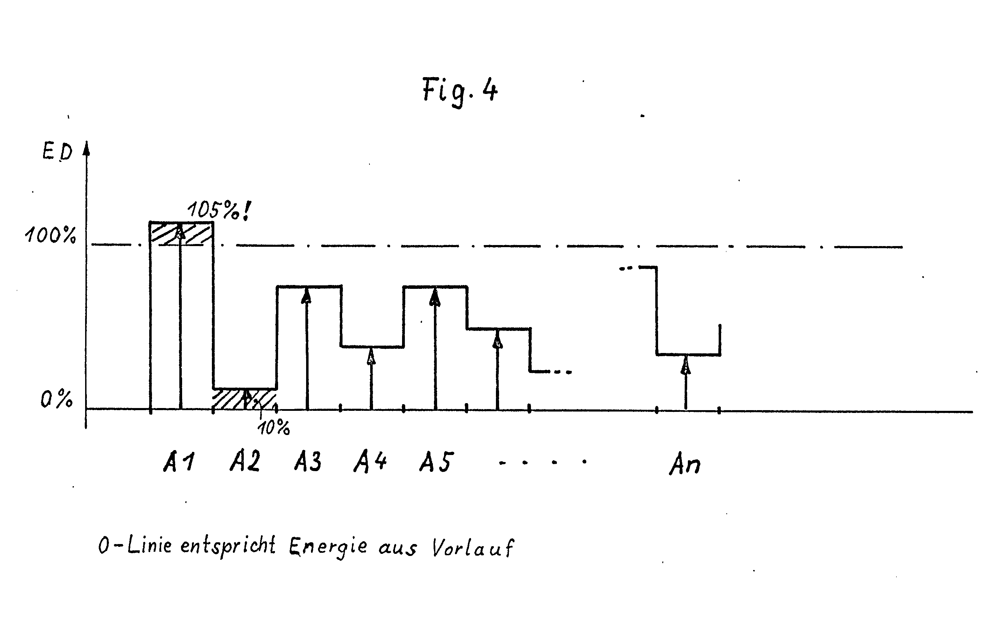

In Fig. 4 ist z.B. im Abteil 2 eine Solltemperatur eingestellt und die Randbedingungen sind so, dass für dieses Abteil der geringste Energiebedarf sämtlicher Abteile erforderlich ist. Die Führungsgrösse für die Einschaltdauer des Heizregisters $HR_1$ bzw. $HR_2$ des Luftbehandlungsgerätes wird dann so eingestellt, dass die Vorlauftemperatur gerade so gross ist, dass sich eine Einschaltdauer des Nachheizkörpers von 10% im Abteil 2 ergibt.

In dieser Fig. 4 ist für das Abteil 1 ein Zusatzenergiebedarf mit 105% Einschaltdauer angegeben, der selbstverständlich durch den Zusatzheizkörper nicht gedeckt werden kann. Durch die Verknüpfung der Regelkreise für die Heizregister des Luftbehandlungsgerätes wird in diesem Falle das Energieangebot des Luftbehandlungsgerätes durch Vergrösserung der Einschaltdauer des Heizregisters so lange angehoben, bis die eingestellte Solltemperatur im Abteil 1 erreicht und die Einschaltdauer auf 90% abgesunken ist. Die Einschaltdauer der Zusatzheizkörper der übrigen Abteile wird dabei so weit abgesenkt, dass sich in allen Abteilen die gewünschte Solltemperatur einstellt.

**Patentansprüche**

1. Verfahren zum Betrieb einer Einkanal-Klimaanlage für Reisezug-Abteilwagen mit mindestens einem den Wärmegrundbedarf deckenden zentralen Luftbehandlungsgerät (L) mit mindestens zwei Heizregistern (HR) für die Vorlauftemperatur des Heizmediums und einem zentralen Steuergerät (SLa), in dem eine Führungsgrösse für die Vorlauftemperatur gebildet wird und Schaltmittel (SLb) in Abhängigkeit von der Führungsgrösse für die Vorlauftemperatur das zentrale Luftbehandlungsgerät schalten, sowie Nachheizkörpern ($N_1$, $N_2$ ... $N_n$) für die individuelle Einstellung der Abteiltemperatur in jedem Abteil, welche jeweils in Abhängigkeit von einem Sollwertgeber in einem Abteil gesteuert wird, dadurch gekennzeichnet, dass die zwei Heizregister (HR1, HR2) des zentralen Luftbehandlungsgeräts (L) durch die Schaltmittel in Abhängigkeit von der Führungsgrösse ($\vartheta_F$) für die Vorlauftemperatur so zeitlich versetzt gegeneinander zu- bzw. abgeschaltet werden, dass die Einschaltung des ersten Heizregisters (HR1) etwa in Mitte der Zeitdauer des Schaltspieles erfolgt und die Führungsgrösse ($\vartheta_F$) für die Vorlauftemperatur im zentralen Steuergerät (SLa) aus der jeweiligen Einschaltdauer der Nachheizkörper ($N_1$, $N_2$ ... $N_n$) der Abteile gebildet wird.

2. Verfahren nach Anspruch 1, dadurch gekennzeichnet, dass die Führungsgrösse ($\vartheta_F$) für die Vorlauftemperatur so lange verändert wird, bis sich für einen der Nachheizkörper ($N_1$, $N_2$ ... $N_n$) der Abteile eine bestimmte minimale bzw. maximale Einschaltdauer ergibt.

3. Verfahren nach Anspruch 2, dadurch gekennzeichnet, dass von den Stellgliedern ($SA_1$, $SA_2$ ... $SA_n$) der Nachheizgeräte ($N_1$, $N_2$ ... $N_n$) laufend die Einschaltdauer (ED) der Nachheizgeräte an das Steuergerät (SLa) für die Heizregister (HR1, HR2) des Luftbehandlungsgerätes (L) übertragen und gespeichert wird, dass aus den gespeicherten Werten der Wert der geringsten Einschaltdauer ausgewählt und überwacht wird und das Stellglied (SLb) für die Heizregister des Luftbehandlungsgerätes so lange Ein- bzw. Ausschaltsignale erhält, bis der Wert der Einschaltdauer einen bestimmten Betrag erreicht.

4. Verfahren nach Anspruch 3, dadurch gekennzeichnet, dass die minimale Einschaltdauer des Nachheizgerätes eines Abteiles etwa 10% beträgt.

5. Verfahren nach Anspruch 2, dadurch gekennzeichnet, dass von den Stellgliedern ($SA_1$, $SA_2$ ... $SA_n$) für die Nachheizgeräte ($N_1$, $N_2$ ... $N_n$) laufend die Einschaltdauer (ED) der Nachheizgeräte an das Steuergerät (SLa) für die Heizregister (HR1, HR2) des Luftbehandlungsgerätes (L) übertragen und gespeichert wird, dass aus den gespeicherten Werten der Wert der höchsten Einschaltdauer ausgewählt und überwacht wird, und das Stellglied (SLb) für die Heizregister des Luftbehandlungsgerätes so lange Ein- bzw. Ausschaltsignale erhält bis der Wert der Einschaltdauer einen bestimmten Betrag erreicht.

6. Verfahren nach Anspruch 5, dadurch gekennzeichnet, dass die maximale Einschaltdauer des Nachheizgerätes eines Abteiles etwa 90% beträgt.

7. Verfahren nach einem der vorgehenden Patentansprüche, dadurch gekennzeichnet, dass die Regelung auf den hohen Einschaltdauerwert Vorrang vor der Regelung auf den kleinen Einschaltdauer-Wert hat.

8. Vorrichtung zur Durchführung des Verfahrens nach einem der vorgehenden Ansprüche, mit mindestens einem den Wärmegrundbedarf deckenden zentralen Luftbehandlungsgerät (L) mit mindestens zwei Heizregistern (HR₁, HR₂) für die Vorlauftemperatur des Heizmediums und einem zentralen Steuergerät, in dem eine Führungsgrösse für die Vorlauftemperatur gebildet wird und Schaltmittel in Abhängigkeit von der Führungsgrösse für die Vorlauftemperatur das zentrale Luftbehandlungsgerät schalten, sowie Nachheizkörpern für die individuelle Einstellung der Abteiltemperatur in jedem Abteil, welche jeweils in Abhängigkeit von einem Sollwertgeber gesteuert wird, dadurch gekennzeichnet, dass Zusatzheizkörper (N₁, N₂ ... Nₙ), Messfühler (I₁, I₂ ... Iₙ) und Sollwertgeber (S₁, S₂ ... Sₙ) in den Abteilen durch kombinierte Steuer- und Stellglieder (SA₁, SA₂ ... SAₙ) in den Abteilen und einem zentralen Steuergerät (SLa) für das zentrale Luftbehandlungsgerät und einem Stellglied (SLb) miteinander verbunden sind, wobei die Messfühler (I) und die Sollwertgeber (S) jeweils mit dem zugehörigen kombinierten Steuergerät-Stellglied (SA₁ ... SAₙ) elektrisch verbunden sind und die Steuer-Stellglieder (SA₁ ... SAₙ) elektrische Verbindungen mit dem zentralen Steuergerät (SLa) für das zentrale Luftbehandlungsgerät (L) aufweisen.

**Claims**

1. Process for operating a single-channel air-conditioning system for passenger-train compartment coaches, with at least one central air treatment unit (L) supplying the basic heat requirement and having at least two heating registers (HR) for the initial flow temperature of the heating medium, with a central control unit (SLa), in which a command variable for the initial flow temperature is formed and switching means (SLb) switch the central air treatment unit as a function of the command variable for the initial flow temperature, and with secondary heating bodies ($N_1$, $N_2$ ... $N_n$) for the individual setting of the compartment temperature in each compartment, this setting being controlled as a function of a desired-value transmitter in each compartment, characterised in that the two heating registers (HR1, HR2) of the central air treatment unit (L) are switched on and off by the switching means as a function of the command variable ($\vartheta_F$) for the initial flow temperature with such a time shift relative to one another that the first heating register (HR1) is switched on approximately in the middle of the period of the switching cycle and the command variable ($\vartheta_F$) for the initial flow temperature is formed in the central control unit (SLa) from the respective operating times of the secondary heating bodies ($N_1$, $N_2$ ... $N_n$) of the compartments.

2. Process according to Claim 1, characterised in that the command variable ($\vartheta_F$) for the initial flow temperature is varied until the specific minimum and maximum operating time is obtained for one of the secondary heating bodies ($N_1$, $N_2$ ... $N_n$) of the compartments.

3. Process according to Claim 2, characterised in that the operating times (ED) of the secondary heating appliances are transmitted by the actuators ($SA_1$, $SA_2$ ... $SA_n$) of the secondary heating appliances ($N_1$, $N_2$ ... $N_n$) continuously to the control unit (SLa) for the heating registers (HR1, HR2) of the air treatment unit (L) and are stored, the value of the shortest operating time is selected from the stored values and monitored, and the actuator (SLb) for the heating registers of the air treatment unit receives switch-on and switch-off signals until the value of the operating time reaches a specific amount.

4. Process according to Claim 3, characterised in that the minimum operating time of the secondary heating appliance of a compartment is approximately 10%.

5. Process according to Claim 2, characterised in that the operating times (ED) of the secondary heating appliances are transmitted by the actuators ($SA_1$, $SA_2$ ... $SA_n$) for the secondary heating appliances ($N_1$, $N_2$ ... $N_n$) continuously to the control unit (SLa) for the heating registers (HR1, HR2) of the air treatment unit (L) and are stored, the value of the longest operating time is selected from the stored values and monitored, and the actuator (SLb) for the heating registers of the air treatment unit receives switch-on and switch-off signals until the value of the operating time reaches a specific amount.

6. Process according to Claim 5, characterised in that the maximum operating time of the secondary heating appliance of a compartment is approximately 90%.

7. Process according to one of the preceding patent Claims, characterised in that regulation to the high operating time value has priority over regulation to the low operating time value.

8. Apparatus for carrying out the process according to one of the preceding Claims, with at least one central air treatment unit (L) supplying the basic heat requirement and having at least two heating registers (HR1, HR2) for the initial flow temperature of the heating medium, with a central control unit, in which a command variable for the initial flow temperature is formed and switching means switch the central air treatment unit as a function of the command variable for the initial flow temperature, and with secondary heating bodies for the individual setting of the compartment temperature in each compartment, this setting being controlled as a function of a desired-value transmitter in each compartment, characterised in that additional heating bodies ($N_1$, $N_2$ ... $N_n$), measuring sensors ($I_1$, $I_2$ ... $I_n$) and desired-value transmitters ($S_1$, $S_2$ ... $S_n$) in the compartments are connected to one another by means of combined control elements and actuators ($SA_1$, $SA_2$ ... $SA_n$) in the compartments and to a central control unit (SLa) for the central air treatment unit and to an actuator (SLb), the measuring sensors (I) and the desired-value transmitters (S) each being connected electrically to the associated combined control element/actuator ($SA_1$ ... $SA_n$) and the control elements/actuators ($SA_1$ ... $SA_n$) having electrical connections to the central control unit (SLa) for the central air treatment unit (L).

**Revendications**

1. Procédé d'exploitation d'une installation de climatisation à canal unique pour voitures à compartiments de trains de voyageurs, avec au moins un appareil de conditionnement d'air central (L) couvrant les besoins de base en chaleur, avec au moins deux registres de chauffage (HR) pour la température de départ du milieu de chauffage et un appareil de commande central (SLa), dans lequel une grandeur de référence pour la température de départ est formée et des moyens de commande (SLb) commandent l'appareil de conditionnement d'air central en fonction de la grandeur de référence pour la température de départ, ainsi que des radiateurs complémentaires ($N_1$, $N_2$ ... $N_n$) pour le réglage individuel de la température de compartiment dans chaque compartiment, qui est commandée à chaque fois en fonction d'un générateur de valeur nominale dans un compartiment, caractérisé en ce que les deux registres de chauffage (HR1, HR2) de l'appareil de conditionnement d'air central (L) sont mis en et hors service par les moyens de commande, en fonction de la grandeur de référence ($\vartheta_F$) pour la température de départ, avec un décalage mutuel dans le temps tel que la mise en service du premier registre (HR1) a lieu approximativement au milieu de l'intervalle de temps du jeu de commande et la grandeur de référence ($\vartheta_F$) pour la température de départ dans l'appareil de commande central (SLa) est formée à partir de la durée de mise en service concernée des radiateurs complémentaires ($N_1$, $N_2$ ... $N_n$) des compartiments.

2. Procédé suivant la revendication 1, caractérisé en ce que la grandeur de référence ($\vartheta_F$) pour la température de départ est modifiée jusqu'à ce que pour un des radiateurs complémentaires ($N_1$, $N_2$ ... $N_n$) des compartiments, une durée de mise en service minimum ou maximum déterminée est obtenue.

3. Procédé suivant la revendication 2, caractérisé en ce qu'à partir des organes de réglage ($SA_1$, $SA_2$ ... $SA_n$) des appareils de chauffage complémentaires ($N_1$, $N_2$ ... $N_n$), la durée de mise en service (ED) des appareils de chauffage complémentaires est constamment transmise et mémorisée dans l'appareil de commande (SLa) pour les registres (HR1, HR2) de l'appareil de conditionnement d'air, en ce qu'à partir des valeurs mémorisées, la valeur de la plus faible durée de mise en service est sélectionnée et surveillée, et en ce que l'organe de réglage (SLb) pour les registres de l'appareil de conditionnement d'air reçoit des signaux de mise en et hors service jusqu'à ce que la valeur de la durée de mise en service atteigne une grandeur déterminée.

4. Procédé suivant la revendication 3, caractérisé en ce que la durée de mise en service minimum de l'appareil de chauffage complémentaire d'un compartiment atteint environ 10%.

5. Procédé suivant la revendication 2, caractérisé en ce qu'à partir des organes de réglage ($SA_1$, $SA_2$ ... $SA_n$) pour les appareils de chauffage complémentaires ($N_1$, $N_2$ ... $N_n$), la durée de mise en service (ED) des appareils de chauffage complémentaires est constamment transmise et mémorisée dans l'appareil de commande (SLa) pour les registres (HR1, HR2) de l'appareil de conditionnement d'air (L), en ce qu'à partir des valeurs mémorisées, la valeur de la plus longue durée de mise en service est sélectionnée et surveillée, et en ce que l'organe de réglage (SLb) pour les registres de l'appareil de conditionnement d'air reçoit des signaux de mise en et hors service jusqu'à ce que la valeur de la durée de mise en service atteigne une grandeur déterminée.

6. Procédé suivant la revendication 5, caractérisé en ce que la durée de mise en service maximum de l'appareil de chauffage complémentaire d'un compartiment atteint environ 90%.

7. Procédé suivant l'une des revendications précédentes, caractérisé en ce que le réglage à la valeur élevée de durée de mise en service a la priorité sur le réglage à la valeur basse de la durée de mise en service.

8. Dispositif pour la mise en œuvre du procédé suivant l'une des revendications précédentes, avec au moins un appareil de conditionnement d'air central (L) couvrant les besoins de base en chaleur, avec au moins deux registres de chauffage ($HR_1$, $HR_2$) pour la température de départ du milieu de chauffage et un appareil de commande central, dans lequel une grandeur de référence pour la température de départ est formée et des moyens de commande en fonction de la grandeur de référence pour la température de départ commandent l'appareil de conditionnement d'air central, ainsi que des radiateurs complémentaires pour le réglage individuel de la température de compartiment dans chaque compartiment, qui est commandée à chaque fois en fonction d'un générateur de valeur nominale, caractérisé en ce que des radiateurs supplémentaires ($N_1$, $N_2$ ... $N_n$), des détecteurs de mesure ($I_1$, $I_2$ ... $I_n$) et des générateurs de valeur nominale ($S_1$, $S_2$ ... $S_n$) dans les compartiments sont reliés entre eux par des organes de commande et de réglage combinés ($SA_1$, $SA_2$ ... $SA_n$) dans les compartiments et un appareil de commande central (SLa) pour l'appareil de conditionnement d'air central et un organe de réglage (SLb), les détecteurs de mesure (I) et les générateurs de valeur nominale (S) étant à chaque fois reliés électriquement à l'appareil de commande-organe de réglage combiné correspondant ($SA_1$, $SA_2$ ... $SA_n$) et les organes de commande-réglage ($SA_1$ ... $SA_n$) présentent des liaisons électriques avec l'appareil de commande central (SLa) pour l'appareil de conditionnement d'air central (L).

## Fig.1

α) Kriterium für "Vorlauf absenken!"

ß) Kriterium für "Vorlauf anheben!"

Fig. 2

L = Luftbehandlungsgerät

K = Luftkanal

SA = Stellglied f. Abteil

# Fig. 3

a)

$\tau_{Zykl.}$

b)

c)

obere Stellgrenze

untere Stellgrenze

α) β) Spielraum für Regeln durch
Nachheizen

Fig. 4

ED

100%

0%

105%!

10%

A1  A2  A3  A4  A5  · · · · ·  An

0-Linie entspricht Energie aus Vorlauf